Europäisches Patentamt

European Patent Office

Office européen des brevets

(11) Publication number: **0 149 517**
**B1**

(12) **EUROPEAN PATENT SPECIFICATION**

(45) Date of publication of patent specification: **13.09.89**

(51) Int. Cl.⁴: **A 23 L 1/32**

(21) Application number: **85300081.8**

(22) Date of filing: **04.01.85**

(54) Liquid egg compositions containing storage-stable solids.

(30) Priority: **05.01.84 US 568365**

(43) Date of publication of application:
**24.07.85 Bulletin 85/30**

(45) Publication of the grant of the patent:
**13.09.89 Bulletin 89/37**

(84) Designated Contracting States:
**AT BE CH DE FR GB IT LI LU NL SE**

(56) References cited:
**DE-A-2 853 556**
**US-A-3 911 144**
**US-A-4 296 134**

(73) Proprietor: **NABISCO BRANDS, Inc.**
**Nabisco Brands Plaza**
**Parsippany New Jersey 07054 (US)**

(72) Inventor: **Rapp, Harold**
**1222 Bronson Road**
**Fairfield Connecticut 06430 (US)**

(74) Representative: **Thomas, Roger Tamlyn et al**
**D. Young & Co. 10 Staple Inn**
**London WC1V 7RD (GB)**

Courier Press, Leamington Spa, England.

# EP 0 149 517 B1

**Description**

This invention relates to liquid egg compositions containing storage stable solids, e.g., cheese or cheese analogs and more particularly, to such compositions also having reduced calorie and/or cholesterol content.

Eggs are a valuable food product known as an important source of nutrients such as proteins, fats, vitamins and minerals. Eggs are also valued as a food for their distinctive flavor, mouthfeel and other organoleptic properties and as such are very desirable for eating by themselves.

The major parts of an egg are the shell composed mostly of calcium carbonate; the white composed mostly of proteins; and the yolk which is mostly a complex mixture of lipids and proteins. Mixtures of egg white and yolk are referred to as whole egg.

Liquid egg products, as the term is used herein, are processed compositions of egg white, yolk or whole egg, optionally including minor amounts of additives such as preservatives, stabilizers, texturizers, or the like. In the United States, egg products are processed to meet Government specifications relating to microbe content, chemical composition, and physical properties. Processing typically involves separating the white and yolks from their shells, pasteurizing and mixing the products thereof with lesser portions of additives. Separation of the shells from the white and yolk usually involves cooling the unbroken eggs to about 10°C, washing, rinsing, sanitizing, flash candling and thereafter breaking the shells and collecting the yolks and whites separately. Suitable pasteurization techniques are discussed in the *Encyclopedia of Chemical Technology*, Kirk-Othmer, John Wiley & Sons, Vol. 8, pp, 429—445.

Findings implicating high blood cholesterol levels and high saturated fat intake in humans with the onset and/or severity of cardiovascular disease and public interest in low calorie diets has stimulated the development of modified egg products containing less cholesterol and saturated fat than products made with whole eggs. Whole egg contains about 548 mg cholesterol and 6.7 g of saturated fat per 100 g and all of these constituents are found in the yolk. See: *Composition of Foods, Dairy and Egg Products, Raw-Process-Dried*, Agriculture Handbook No. 8—1, Agriculture Research Service, U.S.D.A. (1976). Modified liquid egg products having reduced levels of cholesterol and saturated fats may be prepared by removing at least some, and preferably all, of the yolk from the egg white and substituting additives that provide the white with organoleptic properties and coloring similar to whole eggs. The number of calories in such products may be reduced incidentially by the reduction of yolk content.

One example of such a modified egg product is disclosed in U.S. Patent (US—A—)3,911,144, and which discloses a substantially cholesterol free composition having a high degree of freeze/thaw stability comprising from about 24 to 99.5% wt. egg white and typically from about 0.005 to about 0.3% wt. xantham gum. Such egg products may be refrigerated or frozen and show little or no separation of their components when thawed. The thawed products have a viscosity similar to fresh whole eggs and when cooked, e.g., scrambled, produce a food having organoleptic properties similar to fresh scrambled whole eggs.

Another example of a low cholesterol/reduced calorie modified egg product that simulates fresh whole egg in cooked dishes is disclosed in U.S. Patent (US—A—)4,296,134, which product comprises about 60 to 96 parts by weight liquid egg white; 0 to 18 parts water; 2 to 15 parts of a protein replacement such as nonfat dry milk solids, powdered egg albumin and/or soy protein; and small quantities of stabilizer, flavoring, and coloring. These liquid egg products may be refrigerated or frozen for storage.

Consumer-oriented egg products and modified egg products for preparing popular egg dishes that have the organoleptic properties of fresh whole eggs are highly desirable for their economy, high nutrition, convenience, and appeal as a food. Moreover, egg products dishes which include discrete cheese portions or cheese-flavored particles, i.e. pieces, that are added to eggs before cooking to enhance and modify the natural egg flavors and provide discrete zones of natural or imitation cheese are also very desirable. The cheese solids included in such dishes may be particles of natural and/or synthetic cheese cut to a suitable size for incorporation into egg dishes, such as scrambled eggs, omelets or the like, and large enough to provide discrete regions of the melted solids in the final cooked egg dish.

Egg recipes calling for cheese solids to be added to eggs before cooking are well known in the art, but it has heretofore not been practical to add cheese solids to liquid egg products and modified liquid egg products that are to be refrigerated or frozen for substantial periods of time without undesirable softening and disintegration of the cheese particles that causes them to blend with the egg product and lose their structural identity so that they are no longer capable of forming discrete softened or melted cheese solids in cooked egg dishes prepared therefrom. In other words, such egg and cheese products are not storage stable under either refrigerator or freezer temperatures. Thus, the cooked egg dishes prepared from such products after storage have neither the appearance nor organoleptic properties of fresh scrambled eggs, or omelets, with cheese.

The major drawbacks to using many cheese solids in liquid egg products are that they rapidly liquify or melt and agglomerate on standing in the egg products and typically form a gooey mass that adheres to their containers or blends into the egg product. Therefore, when a cooked food such as scrambled eggs is prepared therefrom, the presence of the cheese solid will be unnoticeable in the cooked food, except for whatever it contributes to the overall flavor: or it may form one or a few undesirable large masses of sticky material in the product container or cooked food, e.g. it may lose the texture, consistency and mouthfeel of

2

discrete melted cheese particles in the cooked food. When cheese solids are incorporated into egg products in accordance with the present invention, these drawbacks may be avoided.

Summary of the invention

The present invention provides a storage-stable, egg and cheese composition, which comprises a liquid egg base containing a plurality of discrete cheese solid particles each of which has approximately the dimensions of a 1/16 to 3/8 inch (1.6 to 9.5 mm) cube; said particles providing 5 to 45% of the egg and cheese composition and having a moisture index of 3 or less and a melt index of 1 or less; the liquid egg base comprising 20 to 99.5% by weight egg white; 0 to 1% by weight gum; 0 to 10% by weight nonfat dry milk solids; 0 to 15% by weight oil; and 0 to 5% by weight colorant, vitamin and flavoring; whereby said cheese particles substantially retain their structural integrity during storage for at least 7 days at refrigerator temperatures.

This invention also provides methods of preparing ready-to-cook, storage-stable egg and cheese products comprising the steps of combining liquid egg base with a plurality of cheese solid particles; said particles having a melt index of about 1 or less and a moisture index less than about 3.

More specifically the invention provides a method for preparing a ready-to-cook, storage-stable, egg and cheese composition which comprises a liquid egg base containing a plurality of discrete cheese solid particles each of which has approximately the dimensions of a 1/16 to 3/8 inch (1.6 to 9.5 mm) cube; said particles providing 5 to 45% of the egg and cheese composition and having a moisture index of 3 or less and a melt index of 1 or less; the liquid egg base comprising 20 to 99.5% by weight egg white; 0 to 1% by weight gum; 0 to 10% by weight nonfat dry milk solids; 0 to 15% by weight oil; and 0 to 5% by weight colorant, vitamin and flavoring; whereby said cheese particles substantially retain their structural integrity during storage for at least 7 days at refrigerator temperatures, said method comprising combining the liquid egg base with the plurality of cheese solid particles.

The invention also provides a method for preparing and storing in a stable condition a liquid egg and cheese composition, which composition provides after storage for at least 1 week, a liquid egg base containing discrete pieces of cheese comprising:

(a) preparing a cookable, storage-stable liquid egg and cheese containing composition comprising mixing together discrete solid cheese pieces with a liquid egg base wherein said liquid egg base comprises 20 to 100% by weight egg white, and wherein said cheese pieces have a moisture index of 3 or less and a melt index of 1 or less,

(b) cooling said composition prepared in accordance with step (a) to refrigerator temperatures and maintaining said composition at said temperature for at least 7 days,

(c) removing said egg and cheese composition from said refrigerator temperatures, to provide a liquid egg base containing discrete pieces of said cheese, wherein said liquid egg base is cookable to a food product comprised of cooked egg having discrete softened or melted cheese disposed therein.

The invention further provides a method for preparing and storing in a stable condition a liquid egg base and cheese containing composition, which composition provides after storage at freezer temperatures for at least 3 months a liquid egg composition containing discrete cheese pieces having structural integrity in the liquid egg base comprising:

(a) preparing a cookable, storage-stable composition by mixing together discrete solid cheese pieces with a liquid egg base wherein said liquid egg base comprises 20 to 100% by weight egg white, and wherein said cheese pieces have a moisture index of about 3 or less and a melt index of about 1 or less,

(b) maintaining said product of step (a) in a frozen condition at freezer temperatures for at least about 3 months, and then thawing said composition to provide said liquid egg base containing said discrete pieces of cheese.

A cooked egg and cheese dish may be prepared by heating a composition of the invention until the egg protein coagulates forming a semi-solid mass having discrete melted cheese particles dispersed therein.

As hereinbefore described in detail, the invention can provide ready-to-cook, storage-stable, liquid egg products including cheese solids which retain their shape and do not agglomerate or disintegrate (liquify) when incorporated in liquid egg products for at least 7 days at refrigerator temperatures of about 32—45°F and, at least 3 months, preferably up to a year or more, when stored at conventional freezer temperatures of about −5°F to 10°F, and which after storage form discrete regions of softened or melted cheese texture solids in cooked egg products such as cheese omelets prepared therefrom.

The invention can also provide storage and freeze/thaw stable ready-to-cook egg produced with reduced cholesterol, saturated fats, and/or calories, i.e. modified egg products, including cheese solids that produce, even after extended periods of storage at freezer temperatures, a scrambled egg type egg dish with discrete cheese solid regions having organoleptic properties that closely resemble an omelet prepared from a fresh whole egg mixture including diced cheese pieces.

Detailed description of preferred embodiments of the invention

Ready to cook, storage stable egg and cheese products of the present invention may be prepared by adding cheese solids having a specified moisture index and melt index to a liquid egg base.

Liquid egg base may be whole egg or a processed egg composition derived from the whites and/or yolks of eggs. Such processed egg compositions may be prepared from egg whites and additives that impart desirable organoleptic properties such as flavor, mouthfeel, viscosity, and coloring etc. to the composition before and/or after cooking and may further include vitamins or other fortifiers, preservatives, and the like. Preferably, such processed egg compositions are based on egg whites and are comprised of about 20 to 100% by weight egg white, and more preferably 24 to 99.5% by weight egg white, plus texturizers and/or other additives mentioned herein.

Modified liquid egg products useful herein comprise from about 20 to 99.5% by weight liquid egg white and more preferably about 70—99.5%; 0 to about 1.0% by weight gum or mxitures thereof such as guar, xanthan, carrageenan, carboxymethyl cellulose, or the like; 0 to about 8% by weight nonfat dry milk solids; 0 to about 15% by weight oil such as corn oil, partially hydrogenated soybean oil, or the like; 0 to about 1.0% by weight of emulsifier; and 0 to about 3% by weight colorings, vitamins, flavorings, and the like. The precise quantities of the above ingredients used in a particular modified egg product are selected, insofar as possible, to restore the organoleptic properties and coloring of whole egg lost by elimination of the yolks without significantly increasing the cholesterol and saturated fat concentrations; and further to impart a viscosity similar to that of whole egg and freeze/thaw stability, i.e., the tendency of the modified egg product to separate into distinct layers while being thawed from the frozen state. Such products are commercially available, e.g., the Nabisco Brands, Inc. Egg Beaters—type products.

The above mentioned gums, particularly guar, xanthan, carrageenan and carboxymethyl cellulose, advantageously modify the viscosity and freeze/thaw stability of the modified egg products. These gums are available from various commercial suppliers such as Hercules Inc., FMC Corp. and Kelco Co., and are preferably used in the present egg compositions to the extent of about 0.1—0.5%.

The nonfat dry milk solids and like materials optionally employed in the above-described modified egg products are desirable as an additional source of protein and may improve the texture of cooked egg products and reduce the separation of water therefrom. Preferably about 0.5—5% of nonfat dry milk solids will be employed in the present liquid egg products.

The above mentioned oil in part replaces the oils naturally present in the eliminated egg yolk. Vegetable oils such as corn, cottonseed, soybean, safflower, sunflower, peanut, rape seed, olive, and sesame oils and mixtures thereof are preferred because they contain less saturated fats and cholesterol than other usable oils. Preferably about 7.5—12% of vegetable oil will be used in the egg products useful in the present invention. Corn oil is particularly preferred. The oil may also be useful for dispersing oil soluble colorings in the modified egg product.

The emulsifier, optionally employed in the above-described modified liquid egg product, e.g. lecithin, or another food-compatible synthetic or natural emulsifier, is principally useful for preventing the modified egg product from sticking to the vessel in which it is cooked. Of the synthetic emulsifiers, polyoxy (lower) alkylene mono- and di-glycerides are preferred. The total emulsifier will preferably comprise about 0.25—0.75% by weight of the liquid egg product. Emulsifiers also may influence the texture and homogeneity of the modified egg product both before and after cooking. Lecithin is a preferred emulsifier because it is a natural component of egg yolk.

A useful low cholesterol modified egg product may be prepared as follows:

A suitable vessel is charged with 3,264 pounds (1482 kg) of liquid egg white, then 17 pounds (32 kg) of corn oil is added at 32°C to 45°F (0° to 7°C). These ingredients are thoroughly mixed.

A mixture of dry ingredients is prepared by blending the following ingredients 6.39 pounds (2.9 kg) of carboxymethyl cellulose, 1.97 pounds (0.9 kg) of xanthan gum, 0.3 (0.14 kg) pounds of anhydrous aluminum sulfate, 0.17 pounds (80 g). of ferric orthophosphate, 0.0044 pounds (2 g.) of thiamine mononitrate, 0.0044 (2 g.) pounds of riboflavin and 28.5 pounds (13 kg) of nonfat dry milk and the blended mixture is then added to the previously combined materials with thorough mixing. An additional 329 pounds (149 kg) of corn oil is then added to this mixture, at ambient temperature, with agitation to produce a base mixture.

A premix is prepared in a separate vessel as follows: 75 pounds (34 kg) of corn oil is heated to from 130° to 150°F (54° to 65.6°C) and then 11.7 pounds (5.3 kg) of lecithin and 10 pounds (4.5 kg) of Myvatex 3-50 (a blend of mono- and diglycerides and propylene glycol manufactured by D. P. I. Div. Eastman Chemical Products Co.) are added with mixing. After mixing for 10 to 15 minutes, a small amount of a flavoring agent and a mixture comprising 0.157 pounds of Pigmentene Yellow-Gold (an extract of plant xanthophylls available from Special Nutrients, Inc. Surfside, Fla.), 0.11 pounds (50 g) of a 30 percent dispersion of beta-carotene, and 0.00232 pounds (1 g) of vitamin D in oil is added and thoroughly mixed. This hot premix is then added to the base mixture with blending.

Thereafter the total ingredients mix is pasteurized by heating at a temperature of about 136°F. (58°C) for about 5 minutes and then passed through a Manton-Gaulin two-stage homogenizer, the first stage being at 1000 psi (6,900 kPa) and the second stage being at 500 psi (3,450 kPa). The homogenized product is then tested to confirm that it has an appearance and organoleptic properties similar to fresh whole eggs in both the cooked and uncooked states.

Cheese solids suitable for use in the present invention include natural and synthetic cheeses of any variety such as chedder, Swiss, mozzarella or the like, having a melt index less than about 1 and a moisture index of less than about 3, as explained in greater detail below. An example of a natural commercial cheese product with the above properties is Kraft HI-Melt Swiss available from Kraft, Inc., Memphis, Tenn. An example of a commercially available synthetic cheese with the above properties is American Cheese Substitute available from Schreiber Foods, Inc., Green Bay, Wis.

The cheese solids useful in the present invention have a melt index of about 1 or less and a moisture index less than about 3, so that particles thereof will not lose their structural identity nor degrade in less than 72 hours when stored in water at 40°F (4.5°C), as determined by tests set forth in greater detail below and may derived from commercially-available natural or synthetic cheeses such as Swiss, cheddar, mozzarella, or the like. Cheese solids having the requisite melt index and moisture index will contain about 30—45% by weight water, about 15—25% by weight fat, 15—25% by weight protein, 0—5% by weight salt, and minor amounts of other ingredients such as colorants, flavorings, vitamins, and other cheese compatible ingredients.

So long as the cheese solids have the requisite melt index and moisture index the cheese particles may also be prepared from about 30—40% by weight water, about 15—20% by weight casein, about 15—20% by weight oil, as hereinabove described, preferably partially hydrogenated soybean oil, about 0—15% by weight natural cheese, about 0—10% by weight whey, about 1—5% by weight skim milk, about 0—5% by weight salt, about 0—5% by weight enzyme modified cheese, about 0—0.3% by weight antimicrobial agent such as sorbic acid or its calcium, potassium and sodium salts, about 0—1% by weight disodium phosphate, a sufficient quantity of acid such as lactic acid to adjust the pH of the mixture to about 6 or less; a sufficient quantity of one or more mineral emulsifiers to adjust the melt index of the finished cheese solid to about 1 or less, such as sodium hexametaphosphate or tetrasodium pyrophosphate, and about 0—10% additional flavoring and coloring. An exemplary cheese formulation is:

| Ingredients | % by weight |
| --- | --- |
| Casein | 18.0 |
| Partially hydrogenated soybean oil | 18.0 |
| Whey (Reduced lactate) | 5.0 |
| Skim milk | 4.8 |
| Sodium hexametaphosphate | 2.5 |
| Lactic acid | 7.0 |
| Salt | 2.5 |
| Swiss cheese (natural) | 10.0 |
| Enzyme modified cheese | 2.5 |
| Di-sodium phosphate | 0.5 |
| Sorbic acid | 0.2 |
| Artificial coloring and flavoring | 0.1 |
| Water | 35.2 |

The suitability of a cheese solid, for use in the products of the present invention is determined by its moisture index and melt index. A moisture stable cheese solid has the requisite melt index of about one or less and a 1/4 inch (6.4 mm) cube thereof can be placed in 180 cc of deionized water for 72 hours at a temperature of 40°F (4.5°C) and the cube does not disintegrate into a melted mass but substantially retains its cubical shape.

Moisture index may be determined by placing 60 gms. of 1/4 inch (6.4 mm) cheese solid cubes in 180 g of deionized water in a 400 ml covered beaker for three days (72 hrs) under refrigeration at about 40°F (4.5°C). If after the three days the water is milky, and the cheese solid cubes have rounded edges and are stuck together but not melted into a solid mass, the cheese solid has an acceptable moisture index (less than about 3) for purposes of the present invention. In contrast, if the water has become very cloudy (milky) and the cheese solid cubes have lost their shape, e.g., edges are severely rounded forming a sticky melted mass (agglomeration), they will not be useful in making the storage stable egg and cheese compositions of the present invention. Moisture test results are quantitated using the following table:

5

TABLE I

| Moisture index | Appearance | | Cube consistency |
|---|---|---|---|
| (1) | *Water* | —clear to slightly milky | — Firm body (Hard) |
| | *Cubes* | —well-defined, sharp edges | — Surface not sticky |
| | | | — No tendency for cubes to stick together |
| (2) | *Water* | —milky | — Firm to slightly firm body |
| | *Cubes* | —slightly rounded edges | — Surface may have slight layer of soft cheese |
| | | | — No tendency for cubes to stick together |
| (3) (Boarderline acceptability) | *Water* | —milky | — Soft to sticky |
| | *Cubes* | —rounded edges, some "melted" appearing cheese may be visible | — Large numbers of cubes stuck together but not melted into a mass |
| (4) | *Water* | —very milky, may have dissolved cheese layer floating on surface | — Very sticky |
| | | | — Difficult to identify cubes or to separate them |
| | *Cubes* | —severely rounded edges; "melted" appearance | — Cheese has formed a large "melted" mass |

As indicated in Table I above, cheese solids having a moisture index less than about 3 are suitable for purposes of the present invention and are sometimes referred to herein as moisture-stable cheese solids.

Melt index criteria for cheese solids suitable for use in the present invention is measured by a melt test wherein a cheese solid disc 4.76 mm thick and 39.5 mm in diameter is placed in the center of a covered petri dish and heated to 450°F (232°C) for five minutes. The melted cheese solid is then cooled for thirty minutes centered over a measuring device for determining its melt index. The measuring device comprises a series of numbered concentric circles having diameters incrementally increasing by 6.5 mm. The center circle is numbered 1 and has a diameter of 40 mm; the next circle, moving outwardly, is numbered 2 and has a diameter of 46.5 mm and the remaining circles 3—11 are similarly arranged. A test sample's melt index is measured by determining the largest circle that the melted sample touches and assigning a melt index corresponding to the number of that circle. If a melted cheese solid displays a melt index greater than about 1, it is not acceptable.

Cheese solids having acceptable melt test and moisture index characteristics may be incorporated into the above-described modified egg product or other egg products and then aseptically packaged, for example, in 8.5 oz (0.24 kg) containers, or the like, so that substantially equivalent quantities of cheese solid is put in each container.

An egg and cheese, storage-stable product in accordance with the present invention may be prepared by cutting or dicing a cheese solid loaf, said cheese having a moisture index of about 3 or less and a melt index of about 1 or less, into small pieces, e.g., 1/16—3/8 inch (1.6 to 9.5 mm) cubes and combining the cubes with a liquid egg base as described above. Cubes of about 1/4 inch (6.4 mm) size are preferred because such cubes are more or less uniformly dispersed in liquid egg bases having a viscosity similar to whole egg when shaken or mixed. Thus aliquots of an egg and cheese product that contain about the same proportion of cheese solid particles as present in the whole can be readily obtained.

The proportion of cheese solid to egg base in the egg and cheese products of the invention may be varied as desired to obtain selected cooked egg dishes therefrom. However, egg and cheese products

EP 0 149 517 B1

having about 10 to 45%, preferably about 25%, by weight cheese solids are preferred because they may be cooked to provide products that closely resemble conventional cheese omelets.

A cooked egg and cheese product such as an omelet in accordance with the present invention may be prepared by melting approximately 12 g of margarine until it bubbles and coats a suitable cooking vessel such as an 8 inch (20 cm) skillet and then adding about 240 g of an egg and cheese product prepared in accordance with the foregoing disclosure, cooking is continued in the vessel until a semi-solid mass is formed, the semi-solid mass may then be folded into the familiar omelet (cresent) shape and turned to insure equal cooking and if desired slight browning on both sides. The resulting cooked egg product closely resembles a conventional cheese omelet prepared with whole eggs.

### Example I—Liquid egg base

Another liquid egg base useful in the present invention is prepared by combining the following ingredients:

| Ingredients | % by weight |
| --- | --- |
| Liquid egg white | 98.50 |
| Water | 0.50 |
| Corn oil | 0.28 |
| Xanthan gum | 0.12 |
| Guar gum | 0.07 |
| Carrageenan | 0.02 |
| Vitamin/mineral premix | 0.35 |
| Colorings | 0.16 |

The mixed ingredients are pasteurized by heating to a temperature of 136°F (58°C) for about 5 minutes and then homogenized by passing the mixture through a Manton-Gaulin two-stage homogenizer, the first stage being at 1000 psi (6,900 kPa) and the second stage being at 500 psi (3,450 kPa). The homogenized liquid egg is then tested by well known methods which confirm that it has the organoleptic properties and coloring of whole eggs in both the cooked and uncooked states.

### Example II

A ready-to-cook egg and cheese product is prepared by dicing Kraft High Melt Swiss cheese into 1/4 inch (6.4 mm) cubes and placing 2 oz. (0.06 kg) portions thereof in suitable containers. Approximately 6 oz. (0.18 kg) of the liquid egg base, prepared in Example I above, is then added to the container to form the egg and cheese product.

It is possible to store this egg and cheese product for at least 3 months and preferably a year or more at freezer temperatures and at least 7 days at temperatures less than about 45°F (7°C) without loss of the product's functional characteristics; that is, the product can be thawed, if necessary, and cooked to produce an omelet that closely resembles a fresh omelet prepared with whole egg and cheese.

### Example III

A ready-to-cook egg and cheese product is prepared by dicing Schreiber's American Cheese Substitute into 1/4 inch (6.4 mm) cubes and placing 2 oz. (0.06 kg) portions thereof in suitable containers. Approximately 6 oz. (0.18 kg) of the liquid egg base, prepared in Example I above, is then added to the container to form the egg and cheese product.

It is possible to store this egg and cheese product for at least 3 months and preferably a year or more at freezer temperatures and at least 7 days at temperatures less than about 45°F (7°C) without loss of the product's functional characteristics; that is, the product can be thawed, if necessary and cooked to produce an omelet that closely resembles a fresh omelet prepared with whole egg and cheese.

### Example IV

Once 8.0 oz (0.23 kg) container of the egg and cheese product prepared in Example III which has been stored for more than 7 days at refrigerator or freezer temperatures is shaken well and would be thawed if necessary. The shaken egg and cheese product is poured into a greased heated 8 inch (20 cm) skillet and cooked to a semi-solid mass for about 3 minutes with periodic gentle agitation. Then the semi-solid mass is folded into a crescent and slightly browned on both sides. The resulting cooked egg dish has an

7

EP 0 149 517 B1

appearance and organoleptic properties similar to an omelet prepared with fresh whole egg including discrete pieces of meltyd cheese.

The terms and expressions which have been employed herein are used as terms of description and not of limitation. It is not intended, in the use of such terms and expressions, to exclude any equivalents of the features shown and described or portions thereof, since it is recognized that various modifications are possible within the scope of the invention.

**Claims for the Contracting States BE CH DE FR GB IT LI LU NL SE**

1. A ready-to-cook, storage-stable, egg and cheese composition, which comprises a liquid egg base containing a plurality of discrete cheese solid particles each of which has approximately the dimensions of a 1/16 to 3/8 inch (1.6 to 9.5 mm) cube; said particles providing 5 to 45% of the egg and cheese composition and having a moisture index of 3 or less and a melt index of 1 or less; the liquid egg base comprising 20 to 99.5% by weight egg white; 0 to 1% by weight gum; 0 to 10% by weight nonfat dry milk solids; 0 to 15% by weight oil; and 0 to 5% by weight colorant, vitamin and flavoring; whereby said cheese particles substantially retain their structural integrity showing storage for at least 7 days at refrigerator temperatures.

2. The composition of claim 1 wherein the liquid egg base includes a gum.

3. The composition of claim 2 wherein the gum is selected from xanthan, carrageenan, guar, carboxymethyl celluloes and mixtures thereof; the oil is selected from vegetable, corn, cottonseed, soybean, safflower, sunflower, peanut, rape seed, sesame, partially hydrogenated soybean, and mixtures thereof; and the emulsifier comprises lecithin.

4. The composition of claim 3 wherein the cheese solid comprises 30 to 40% by weight water, 15 to 20% by weight casein; 15 to 20% by weight oil; 0 to 15% by weight natural cheese; 0 to 10% by weight whey; 1 to 5% by weight skim milk; 0 to 5% by weight salt, 0 to 5% by weight enzyme modified cheese; 0 to 0.3% by weight antimicrobial agent; 0 to 1% by weight disodium phosphate, sufficient acid to adjust the pH of the cheese solid to 6 or less; a sufficient quantity of mineral emulsifier to adjust the melt index of the cheese solid to 1 or less; and 0 to 10% by weight additional flavoring and coloring.

5. The composition of claim 4 wherein the mineral emulsifier is selected from sodium hexamethaphosphate and tetrasodium pyrophosphate.

6. The composition of any preceding claim wherein the cheese solids comprise between about 10 and 45% by weight of the egg and cheese composition.

7. A method for preparing a ready-to-cook, storage-stable, egg and cheese composition which comprises a liquid egg base containing a plurality of discrete cheese solid particles each of which has approximately the dimensions of a 1/16 to 3/8 inch (1.6 to 9.5 mm) cube; said particles providing 5 to 45% of the egg and cheese composition and having a moisture index of 3 or less and a melt index of 1 or less; the liquid egg base comprising 20 to 99.5% by weight egg white; 0 to 1% by weight gum; 0 to 10% by weight nonfat dry milk solids; 0 to 15% by weight oil; and 0 to 5% by weight colorant, vitamin and flavoring; whereby said cheese particles substantially retain their structural integrity during storage for at least 7 days at refrigerator temperatures, said method comprising combining the liquid egg base with the plurality of cheese solid particles.

8. A method for preparing a cooked egg and cheese dish, which comprises heating a composition according to any one of claims 1 to 6 until the egg protein coagulates forming a semi-solid mass having discrete melted cheese particles dispersed therein.

9. A method for preparing and storing in a stable condition a liquid egg and cheese composition, which composition provides after storage for at least 1 week, a liquid egg base containing discrete pieces of cheese comprising:

(a) preparing a cookable, storage-stable liquid egg and cheese containing composition comprising mixing together discrete solid cheese pieces with a liquid egg base wherein said liquid base comprises 20 to 100% by weight egg white, and wherein said cheese pieces have a moisture index of 3 or less and a melt index of 1 or less,

(b) cooling said composition prepared in accordance with step (a) to refrigerator temperatures and maintaining said composition at said temperature for at least 7 days,

(c) removing said egg and cheese composition from said refrigerator temperatures, to provide a liquid egg base containing discrete pieces of said cheese, wherein said liquid egg base is cookable to a food product comprised of cooked egg having discrete softened or melted cheese disposed therein.

10. A method for preparing and storing in a stable condition a liquid egg base and cheese containing composition, which composition provides after storage at freezer temperatures for at least 3 months a liquid egg composition containing discrete cheese pieces having structural integrity in the liquid egg base comprising:

(a) preparing a cookable, storage-stable composition by mixing together discrete solid cheese pieces with a liquid egg base wherein said liquid egg base comprises 20 to 100% by weight egg white, and wherein said cheese pieces have a moisture index of about 3 or less and a melt index of about 1 or less,

(b) maintaining said product of step (a) in a frozen condition at freezer temperatures for at least about 3

8

months, and then thawing said composition to provide said liquid egg base containing said discrete pieces of cheese.

11. The method according to claim 10 wherein the thawed product of claim 10 is cooked to provide a product comprising cooked egg having discrete softened or melted cheese disposed therein.

12. The method according to claim 10 or 11 wherein the liquid egg base includes a gum.

13. The method according to claim 10 or 11 wherein the liquid egg base comprises 20 to 99.5% by weight egg white; 0 to 1% by weight gum, 0 to 10% by weight nonfat dry milk solids; 0 to 15% by weight oil; and 0 to 5% by weight colorant, vitamins and flavorings.

14. The method according to claim 12 or 13 wherein the gum is selected from xanthan, carrageenan, guar, carboxymethyl cellulose and mixtures thereof; the oil is selected from vegetable, corn, cottonseed, sesame, partially hydrogenated soybean, and mixtures thereof; and said liquid egg base includes an emulsifier which is comprised of lecithin.

15. The method according to claim 14 wherein the cheese solid comprises 30 to 40% by weight water, 15 to 20% by weight casein; 15 to 20% by weight oil; 0 to 15% by weight natural cheese; 0 to 10% by weight whey; 1 to 5% by weight skim milk; 0 to 5% by weight salt; 0 to 5% by weight enzyme modified cheese; 0 to 0.3% by weight antimicrobial agent; 0 to 1% by weight disodium phosphate; sufficient acid to adjust the pH of the cheese solid to 6 or less; a sufficient quantity of mineral emulsifier to adjust the melt index of the cheese solid to 1 or less; and 0 to 10% by weight additional flavoring and coloring.

16. The method according to claim 15 wherein the mineral emulsifier is selected from sodium hexamethaphosphate and tetrasodium pyrophosphate.

17. The method according to claim 10 wherein each cheese solid particle has the approximate dimensions of 1/16 to 3/8 inch (1.6 to 9.5 mm) cube.

18. The method according to claim 17 wherein the cheese solids comprise between 10 and 45% by weight of the egg and cheese composition.

19. The method according to claim 9 or 10 wherein said liquid egg base is comprised of a low cholesterol, reduced calorie egg product comprising by weight 60 to 96 parts egg white, 0 to 18 parts water, 2 to 15 parts protein and minor effective amounts of stabilizer, flavoring and coloring.

20. The method according to claim 19 wherein said protein is selected from nonfat dry milk solids, powdered egg albumin and soy protein.

21. The method according to claim 10 or 11 wherein said cheese comprises by weight about 18% casein, 10% partially hydrogenated soybean oil, 5% whey, 4.8% skim milk, 2.5% lactic acid, 2.5% salt, 10% Swiss cheese, 2.5% enzyme modified cheese, 0.5% disodium phosphate, 0.2% sorbic acid and 35% water.

22. The method according to claim 9 wherein following said refrigeration said liquid egg and cheese product is cooked to provide a cooked egg product having discrete cheese pieces disposed therein.

## Claims for the Contracting State AT

1. A method for preparing a ready-to-cook, storage-stable, egg and cheese composition which comprises a liquid egg base containing a plurality of discrete cheese solid particles each of which has approximately the dimensions of a 1/16 to 3/8 inch (1.6 to 9.5 mm) cube; said particles providing 5 to 45% of the egg and cheese composition and having a moisture index of 3 or less and a melt index of 1 or less; the liquid egg base comprising 20 to 99.5% by weight egg white; 0 to 1% by weight gum; 0 to 10% by weight nonfat dry milk solids; 0 to 15% by weight oil; and 0 to 5% by weight colorant, vitamin and flavoring; whereby said cheese particles substantially retain their structural integrity during storage for at least 7 days at refrigerator temperatures, said method comprising combining the liquid egg base with the plurality of cheese solid particles.

2. The method according to claim 1 wherein the liquid egg base includes a gum.

3. The method according to claim 2 wherein the gum is selected from xanthan, carrageenan, guar, carboxymethyl cellulose and mixtures thereof; the oil is selected from vegetable, corn, cottonseed, soybean, safflower, sunflower, peanut, rape seed, sesame, partially hydrogenated soybean, and mixtures thereof; and the emulsifier comprises lecithin.

4. The method according to claim 3 wherein the cheese solid comprises 30 to 40% by weight water, 15 to 20% by weight casein; 15 to 20% by weight oil; 0 to 15% by weight natural cheese; 0 to 10% by weight whey; 1 to 5% by weight skim milk; 0 to 5% by weight salt, 0 to 5% by weight enzyme modified cheese; 0 to 0.3% by weight antimicrobial agent; 0 to 1% by weight disodium phosphate; sufficient acid to adjust the pH of the cheese solid to 6 or less; a sufficient quantity of mineral emulsifier to adjust the melt index of the cheese solid to 1 or less; and 0 to 10% by weight additional flavoring and coloring.

5. A method according to claim 4 wherein the mineral emulsifier is selected from sodium hexamethaphosphate and tetrasodium pyrophosphate.

6. The method according to any preceding claim wherein the cheese solids comprise between about 10 and 45% by weight of the egg and cheese composition.

7. A method for preparing a cooked egg and cheese dish, which comprises heating a composition prepared by a method according to any one of claims 1 to 6 until the egg protein coagulates forming a semi-solid mass having discrete melted cheese particles dispersed therein.

8. A method for preparing and storing in a stable condition a liquid egg and cheese composition, which composition provides after storage for at least 1 week, a liquid egg base containing discrete pieces of cheese comprising:

(a) preparing a cookable, storage-stable liquid egg and cheese containing composition comprising mixing together discrete solid cheese pieces with a liquid egg base wherein said liquid egg base comprises 20 to 100% by weight egg white, and wherein said cheese pieces have a moisture index of 3 or less and a melt index of 1 or less,

(b) cooling said composition prepared in accordance with step (a) to refrigerator temperatures and maintaining said composition at said temperature for at least 7 days,

(c) removing said egg and cheese composition from said regrigerator temperatures, to provide a liquid egg base containing discrete pieces of said cheese, wherein said liquid egg base is cookable to a food product comprised of cooked egg having discrete softened or melted cheese disposed therein.

9. A method for preparing and storing in a stable condition a liquid egg base and cheese containing composition, which composition provides after storage at freezer temperatures for at least 3 months a liquid egg composition containing discrete cheese pieces having structural integrity in the liquid egg base comprising:

(a) preparing a cookable, storage-stable composition by mixing together discrete solid cheese pieces with a liquie egg base wherein said liquid egg base comprises 20 to 100% by weight egg white, and wherein said cheese pieces have a moisture index of about 3 or less and a melt index of about 1 or less,

(b) maintaining said product of step (a) in a frozen condition at freezer temperatures for at least about 3 months, and then thawing said composition to provide said liquid egg base containing said discrete pieces of cheese.

10. The method according to claim 9 wherein the thawed product of claim 9 is cooked to provide a product comprising cooked egg having discrete softened or melted cheese disposed therein.

11. The method according to claim 9 or 10 wherein the liquid egg base includes a gum.

12. The method according to claim 9 or 10 wherein the liquid egg base comprises 20 to 99.5% by weight egg white; 0 to 1% by weight gum, 0 to 10% by weight nonfat dry milk solids; 0 to 15% by weight oil; and 0 to 5% by weight colorant, vitamins and flavorings.

13. The method according to claim 11 or 12 wherein the gum is selected from xanthan, carrageenan, guar, carboxymethyl cellulose and mixtures thereof; the oil is selected from vegetable, corn, cottonseed, sesame, partially hydrogenated soybean, and mixtures thereof; and said liquid egg base includes an emulsifier which is comprised of lecithin.

14. The method according to claim 13 wherein the cheese solid comprises 30 to 40% by weight water, 15 to 20% by weight casein; 15 to 20% by weight oil; 0 to 15% by weight natural cheese; 0 to 10% by weight whey; 1 to 5% by weight skim milk; 0 to 5% by weight salt; 0 to 5% by weight enzyme modified cheese; 0 to 0.3% by weight antimicrobial agent; 0 to 1% by weight disodium phosphate; sufficient acid to adjust the pH of the cheese solid to 6 or less; a sufficient quantity of mineral emulsifier to adjust the melt index of the cheese solid to 1 or less; and 0 to 10% by weight additional flavoring and coloring.

15. The method according to claim 14 wherein the mineral emulsifier is selected from sodium hexamethaphosphate and tetrasodium pyrophosphate.

16. The method according to claim 9 wherein each cheese solid particle has the approximate dimensions of a 1/16 to 3/8 inch (1.6 to 9.5 mm) cube.

17. The method according to claim 16 wherein the cheese solids comprise between 10 and 45% by weight of the egg and cheese composition.

18. The method according to claim 8 or 9, wherein said liquid egg base is comprised of a low cholesterol, reduced calorie egg products comprising by weight 60 to 96 parts egg white, 0 to 18 parts water, 2 to 15 parts protein and minor effective amounts of stabilizer, flavoring and coloring.

19. The method according to claim 18 wherein said protein is selected from nonfat dry milk solids, powdered egg albumin and soy protein.

20. The method according to claim 9 or 10 wherein said cheese comprises by weight about 18% casein, 18% partially hydrogenated soybean oil, 5% whey, 4.8% skim milk, 2.5% lactic acid, 2.5% salt, 10% Swiss cheese, 2.5% enzyme modified cheese, 0.5% disodium phosphate, 0.2% sorbic acid and 35% water.

21. The method according to claim 8 wherein following said refrigeration said liquid egg and cheese product is cooked to provide a cooked egg product having discrete cheese pieces disposed therein.

**Patentansprüche für die Vertragsstaaten BE, CH, DE, FR, GB, IL, LI, LU, NL, SE**

1. Kochfertige, lagerungsstabile Ei- und Käsezusammensetzung, welche umfaßt eine flüssige Eibasis enthaltend eine Anzahl von voneinander getrennten festen Käseteilchen, von welchen jedes ungefähr die Dimensionen eines 16 bis 3/8 Zoll (1,6 bis 9,5 mm) Würfels hat; wobei diese Teilchen 5 bis 45% der Ei- und Käsezusammensetzung ausmachen und einen Feuchtigkeitsindex von 3 oder weniger und einen Schmelzindex von 1 oder weniger haben; und die flüssige Eibasis 20 bis 99,5 Gew.% Eiweiß, 0 bis 1 Gew.% Gummi, 0 bis 10 Gew.% fettfreie, trockene Milchfeststoffe, 0 bis 15 Gew.% Öl und 0 bis 5 Gew.% Farbstoff, Vitamin und Geschmacksstoff enthält; wobei die genannten Käseteilchen während einer Lagerung von mindestens 7 Tagen bei Kühlschranktemperaturen ihre strukturelle Integrität im wesentlichen beibehalten.

2. Zusammensetzung nach Anspruch 1, dadurch gekennzeichnet, daß die flüssige Eibasis einen Gummi enthält.

3. Zusammensetzung nach Anspruch 2, dadurch gekennzeichnet, daß der Gummi ausgewählt wird aux Xanthan, Carrageen, Guar, Carboxymethylcellulose und Mischungen derselben; das Öl ausgewählt wird aus Pflanzen, Mais, Baumwollsamen, Sojabohnen, Saflor, Sonnenblumen, Erdnuß, Rapssamen, Sesam, Teilweise hydrogenierten Sojabohnen und Mischungen derselben; und das Emulgierungsmittel Lecithin umfaßt.

4. Zusammensetzung nach Anspruch 3, dadurch gekennzeichnet, daß der Käsefeststoff enthält: 30 bis 40 Gew.% Wasser, 15 bis 20 Gew.% Kasein, 15 bis 20 Gew.% öl, 0 bis 15 Gew.% Naturkäse, 0 bis 10 Gew.% Molke, 1 bis 5 Gew.% Magermilch, 0 bis 5 Gew.% Salz, 0 bis 5 Gew.% enzymmodifizierten Käse, 0 bis 0,3 Gew.% antimikrobielles Mittel, 0 bis 1 Gew.% Dinatriumphosphat, ausreichend Säure zur Einstellung des pH-Wertes des Käsefeststoffes auf 6 oder weniger, eine ausreichende Menge Mineralemulgator zur Einstellung des Schmelzindexes des Käsefeststoffes auf 1 oder weniger und 0 bis 10 Gew.% zusätzlichen Geschmacks- und Farbstoff.

5. Zusammensetzung nach Anspruch 4, dadurch gekennzeichnet, daß der Mineralemulgator ausgewählt wird aus Natriumhexametaphosphat und Tetranatriumpyrophosphat.

6. Zusammensetzung nach einem der vorhergehenden Ansprüche, dadurch gekennzeichnet, daß die Käsefeststoff zwischen ungefähr 10 und 45 Gew.% der Ei- und Käsezusammensetzung umfassen.

7. Verfahren zur Herstellung einer kochfertigen, lagerungsstabilen Ei- und Käsezusammensetzung, welche umfaßt eine flüssige Eibasis enthaltend eine Anzahl von voneinander getrennten festen Käseteilchen, von welchen jedes ungefähr die Dimension eines 1/16 bis 3/8 Zoll (1,6 bis 9,5 mm) Würfels hat; wobei diese Teilchen 5 bis 45% der Ei und Käsezusammensetzung ausmachen und einen Feuchtigkeitsindex von 3 oder weniger und einen Schmelzindex von 1 oder weniger haben; und die flüssige Eibasis 20 bis 99,5 Gew.% Eiweiß, 0 bis 1 Gew.% Gummi, 0 bis 10 Gew.% fettfreie, trockene Milchfeststoffe, 0 bis 15 Gew.% öl und 0 bis 5 Gew.% Farbstoff, Vitamin und Geschmacksstoff enthält; wobei die genannten Käseteilchen während einer Lagerung von mindestens 7 Tagen bei Kühlschranktemperaturen ihre strukturelle Integrität im wesentlichen beibehalten, wobei dieses Verfahren das Mischen der flüssigen Eibasis mit der Anzahl von festen Käseteilchen umfaßt.

8. Verfahren zur Herstellung eines gekochten Ei- und Käsegerichtes, welches Erhitzen einer Zusammensetzung nach einem der Ansprüche 1 bis 6 umfaßt, bis das Eiprotein koaguliert und eine halbfeste Masse mit voneinander getrennten, geschmolzenen, darin dispergierten Käseteilchen bildet.

9. Verfahren zur Herstellung und Lagerung in stabilem Zustand einer flüssigen Ei- und Käsezusammensetzung, wobei diese Zusammensetzung nach einer Lagerung von mindestens einer Woche eine flüssige Eibasis mit voneinander getrennten Käseteilchen ist, umfassend:

(a) Herstellen einer kochfähigen, lagerungsstabilen, Flüssigei und Käuse enthaltenden Zusammensetzung, wobei voneinander getrennte, feste Käsestückchen mit einer flüssigen Eibasis gemischt werden, worin diese flüssige Eibasis 20 bis 100 Gew.% Eiweiß umfaßt, und die genannten Käsestückchen einen Feuchtigkeitsindex von 3 oder weniger und einen Schmelzindex von 1 oder weniger haben.

(b) Entfernen dieser Ei- und Käsezusammensetzung von diesen Kühlschranktemperaturen zur Herstellung einer flüssigen Eibasis enthaltend voneinander getrennte Stückchen des genannten Käses, wobei diese flüssige Eibasis zu einem Nahrungsprodukt bestehend aus gekochtem Ei mit voneinander getrennten, darin erweichtem oder geschmolzenem Käse gekocht werden kann.

(c) Abkühlen dieser gemäß Schritt (1) hergestellten Zusammensetzung auf Kühlschranktemperaturen und Aufbewahren dieser Zusammensetzung bei dieser Temperatur über mindestens 7 Tage.

10. Verfahren zur Herstellung und Lagerung in stabilem Zustand einer flüssigen und käsehaltigen Zusammensetzung, wobei diese Zusammensetzung nach einer Lagerung bei Tiefkühltemperaturen über einen Zeitraum von mindestens 3 Monaten eine flüssige, voneinander getrennte Käsestückchen enthaltende Eizusammensetzung mit struktureller Integrität in der flüssigen Eibasis ist, wobei das Verfahren umfaßt:

(a) Herstellen einer kochbaren, lagerungsstabilen Zusammensetzung durch Zusammenmischen von voneinander getrennten, festen Käsestückchen und einer flüssigen Eibasis, worin die genannte flüssige Eibasis 20 bis 100 Gew.% Eiweiß umfaßt, und die genannten Käsestückchen einen Feuchtigkeitsindex von ungefähr 3 oder weniger und einen Schmelzindex von ungefähr 1 oder weniger haben.

(b) Aufbewahren dieses Produktes aus Schritt (a) in gefrorenem Zustand bei Tiefkühltemperaturen über einen Zeitraum von mindestens 3 Monaten, und dann Auftauen dieser Zusammensetzung, sodaß man die genannte flüssige, die voneinander getrennten Käsestückchen enthaltende Eibasis erhält.

11. Verfahren nach Anspruch 10, dadurch gekennzeichnet, daß das aufegetaute Produkt nach Anspruch 10 gekocht wird, sodaß man ein Produkt aus gekochtem Ei mit voneinander getrennten, darin erweichten oder geschmolzenen Käsestückchen erhält.

12. Verfahren nach Anspruch 10 oder 11, dadurch gekennzeichnet, daß die flüssige Eibasis eien Gummi enthält.

13. Verfahren nach Anspruch 10 oder 11, dadurch gekennzeichnet, daß die flüssige Eibasis 20 bis 99,5 Gew.% Eiweiß 0 bis 1 Gew.% Gummi, 0 bis 10 Gew.% fettfreie, trockene Milchfeststoffe, 0 bis 15 Gew.% öl und 0 bis 5 Gew.% Farbstoff, Vitamine und Geschmacksstoffe enthält.

14. Verfahren nach Anspruch 12 oder 13, dadurch gekennzeichnet, daß der Gummi ausgewählt wird

11

aus Xanthan, Carrageen, Guar, Carboxymethylcellulose und Mischungen derselben; das öl ausgewählt wird aus Pflanzen, Mais, Baumwollsamen, Sojabohnen, Saflor, Sonnenblumen, Erdnuß, Rapssamen, Sesam, teilweise hydrogenierten Sojabohnen und Mischungen derselben; und das Emulgierungsmittel Lecithin umfaßt.

15. Verfahren nach Anspruch 14, dadurch gekennzeichnet, daß der Käsefeststoff enthält: 30 bis 40 Gew.% Wasser, 15 bis 20 Gew.% Kasein, 15 bis 20 Gew.% öl bis 15 Gew.% Naturkäse, 0 bis 10 Gew.% Molke, 1 bis 5 Gew.% Magermilch, 0 bis 5 Gew.% Salz, 0 bis 5 Gew.% enzymmodifizierten Käse, 0 bis 0,3 Gew.% antimikrobielles Mittel, 0 bis 1 Gew.% Dinatriumphosphat, ausreichend Säure zur Einstellung des pH-Wertes des Käsefeststoffes auf 6 oder weniger, eine ausreichende Menge Mineralemulgator zur Einstellung des Schmelzindexes des Käsefeststoffes aus 1 oder weniger und 0 bis 10 Gew.% zusätzlichen Geschmacks- und Farbstoff.

16. Verfahren nach Anspruch 15, dadurch gekennzeichnet, daß der Mineralemulgator ausgewählt wird aus Natriumhexametaphosphat und Tetranatriumpyrophosphat.

17. Verfahren nach Anspruch 10, dadurch gekennzeichnet, daß jeder Käsefeststoffteil ungefähr die Dimensionen eines 1/16 bis 3/8 Zoll (1,6 bis 9,5 mm) Würfels hat.

18. Verfahren nach Anspruch 17, dadurch gekennzeichnet, daß die Käsefeststoffe zwischen 10 und 45 Gew.% der Ei- und Käsezusammensetzung umfassen.

19. Verfahren nach Anspruch 9 oder 10, dadurch gekennzeichnet, daß die genannte flüssige Eibasis aus einem Eiprodukt mit geringem Cholesterin- und reduziertem Kaloriengehalt besteht, das 60 bis 96 Teile Eiweiß, 0 bis 18 Teile Wasser, 2 bis 15 Teile Protein und geringe effektive Mengen Stabilisatoren, Geschmacks- und Farbstoffe enthält.

20. Verfahren nach Anspruch 19, dadurch gekennzeichnet, daß das genannte Protein ausgewählt wird aus fettfreien, trockenen Milchfeststoffen, pulverförmigem Eialbumin und Sojaprotein.

21. Verfahren nach Anspruch 10 oder 11, dadurch gekennzeichnet, daß der Käse bezogen auf das Gewicht enthält: ungefähr 18% Kasein, 18% teilweise hydrogeniertes Sojabohnenöl, 5% Molke, 4,8% Magermilch, 2,5% Milchsäure, 2,5% Salz, 10% Schweizerkäse, 2,5% enzymmodifizierten Käse, 0,5% Dinatriumphosphat, 0,2% Sorbinsäure und 35% Wasser.

22. Verfahren nach Anspruch 9, dadurch gekennzeichnet, daß nach der Kühlung das genannte flüssige Ei- und Käseprodukt gekocht wird, sodaß man ein gekochtes Eiprodukt mit darin enthaltenen, voneinander getrennten Käsestückchen erhält.

## Patentansprüche für den Vertragsstaat AT

1. Verfahren zur Herstellung einer kochfertigen, lagerungsstabilen Ei- und Käsezusammensetzung, welche umfaßt eine flüssige Eibasis enthaltend eine Anzahl von voneinander getrennten festen Käseteilchen, von welchen jedes ungefähr die Dimensionen eines 1/16 bis 3/8 Zoll (1,6 bis 9,5 mm) Würfels hat; wobei diese Teilchen 5 bis 45% der Ei- und Käsezusammensetzung ausmachen und einen Feuchtigkeitsindex von 3 oder weniger und einen Schmelzindex von 1 oder weniger haben; und die flüssige Eibasis 20 bis 99,5 Gew.% Eiweiß, 0 bis 1 Gew.% Gummi, 0 bis 10 Gew.% fettfreie, trockene Milchfeststoffe, 0 bis 15 Gew.% öl und 0 bis 5 Gew.% Farbstoff, Vitamin und Geschmacksstoff enthält; wobei die genannten Käseteilchen während einer Lagerung von mindestens 7 Tagen bei Kühlschranktemperaturen ihre strukturelle Integrität beibehalten, wobei dieses Verfahren Mischen der flüssigen Eibasis mit der Anzahl von Käsefeststoffteilchen umfaßt.

2. Verfahren nach Anspruch 1, dadurch gekennzeichnet, daß die flüssige Eibasis einen Gummi enthält.

3. Verfahren nach Anspruch 2, dadurch gekennzeichnet, daß der Gummi ausgewählt wird aus Xanthan, Carrageen, Guar, Carboxymethylcellulose und Mischungen derselben; das öl ausgewählt wird aus Pflanzen, Mais, Baumwollsamen, Sojabohnen, Saflor, Sonnenblumen, Erdnuß, Rapssamen, Sesam, Teilweise hydrogenierten Sojabohnen und Mischungen derselben; und das Emulgierungsmittel Lecithin umfaßt.

4. Verfahren nach Anspruch 3, dadurch gekennzeichnet, daß der Käsefeststoff enthält: 30 bis 40 Gew.% Wasser, 15 bis 20 Gew.% Kasein, 15 bis 20 Gew.% öl, 0 bis 15 Gew.% Naturkäse, 0 bis 10 Gew.% Molke, 1 bis 5 Gew.% Magermilch, 0 bis 5 Gew.% Salz, 0 bis 5 Gew.% enzymmodifierten Käse, 0 bis 0,3 Gew.% antimikrobielles Mittel, 0 bis 1 Gew.% Dinatriumphosphat, ausreichend Säure zur Einstellung des pH-Wertes des Käseststoffes auf 6 oder weniger, eine ausreichende Menge Mineralemulgator zur Einstellung des Schmelzindexes des Käsefeststoffes auf 1 oder weniger und 0 bis 10 Gew.% zusätzlichen Geschmacks- und Farbstoff.

5. Verfahren nach Anspruch 4, dadurch gekennzeichnet, daß der Mineralemulgator ausgewählt wird aus Natriumhexametaphosphat und Tetranatriumpyrophosphat.

6. Verfahren nach einem der vorhergehenden Ansprüche, dadurch gekennzeichnet, daß die Käsefeststoffe zwischen ungefähr 10 bis 45 Gew.% der Ei- und Käsezusammensetzung umfassen.

7. Verfahren zur Herstellung eines gekochten Ei- und Käsegerichtes, welches umfaßt:
Erhitzen einer mit Hilfe eines Verfahrens nach einem der Ansprüche 1 bis 6 hergestellten Zusammensetzung bis das Eiprotein koaguliert und eine halbfeste Masse mit voneinander getrennten, geschmolzenen, darin dispergierten Käsestückchen bildet.

8. Verfahren zur Herstellung und Lagerung in stabilem Zustand einer flüssigen Ei- und Käsezusammensetzung, wobei diese Zusammensetzung nach einer Lagerung von mindestens einer Woche eine flüssige Eibasis mit voneinander getrennten Käseteilchen ist, umfassend:

(a) Herstellen einer kochfähigen, Lagerungsstabilen, Flüssigei und Käse enthaltenden Zusammensetzung, wobei voneinander getrennte, feste Käsestückchen mit einer flüssigen Eibasis gemischt werden, worin diese flüssige Eibasis 20 bis 100 Gew.% Eiweiß umfaßt, und die genannten Käsestückchen einen Feuchtigkeitsindex von 3 oder weniger und einen Schmelzindex von 1 oder weniger haben.

(b) Abkühlen dieser gemäß Schritt (a) hergestellten Zusammensetzung auf Kühlschranktemperaturen und Aufbewahren dieser Zusammensetzung bei dieser Temperatur über mindestens 7 Tage.

(c) Entfernen dieser Ei- und Käsezusammensetzung von diesen Kühlschranktemperaturen zur Herstellung einer flüssigen Eibasis enthaltend voneinander getrennte Stückchen des genannten Käses, wobei diese flüssige Eibasis zu einem Nahrungsprodukt bestehend aus gekochtem Ei mit voneinander getrennten, darin erweichtem oder geschmolzenem Käse gekocht werden kann.

9. Verfahren zur Herstellung und Lagerung in stabilem Zustand einer flüssigen und käsehaltigen Zusammensetzung, wobei diese Zusammensetzung nach einer Lagerung bei Tiefkühltemperaturen über einen Zeitraum von mindestens 3 Monaten eine flüssige, voneinander getrennte Käsestückchen enthaltende Eizusammensetzung mit struktureller Integrität in der flüssigen Eibasis ist, wobei das Verfahren umfaßt:

(a) Herstellen einer kochbaren, lagerungsstabilen Zusammensetzung durch Zusammenmischen von voneinander getrennten, festen Käsestückchen und einer flüssigen Eibasis, worin die genannte flüssige Eibasis 20 bis 100 Gew.% Eiweiß umfaßt, und die genannten Käsestückchen einen Feuchtigkeitsindex von ungefähr 3 oder weniger und einen Schmelzindex von ungefähr 1 oder weniger haben.

(b) Aufbewahren dieses Produktes aus Schritt (a) in gefrorenem Zustand bei Tiefkühltemperaturen über einen Zeitraum von mindestens 3 Monaten, und dann Auftauen dieser Zusammensetzung, sodaß man die genannte flüssige, die voneinander getrennten Käsestückchen enthaltende Eibasis erhält.

10. Verfahren nach Anspruch 9, dadurch gekennzeichnet, daß das ausgetaute Produkte nach Anspruch 9 gekocht wird, so daß man ein Produkt aus gekochtem Ei mit voneinander getrennten, darin erweichten oder geschmolzenen Käsestückchen erhält.

11. Verfahren nach Anspruch 9 oder 10, dadurch gekennzeichnet, daß die flüssige Eibasis einen Gummi enthält.

12. Verfahren nach Anspruch 9 oder 10, dadurch gekennzeichnet, daß die flüssige Eibasis 20 bis 99,5 Gew.% Eiweiß, 0 bis 1 Gew.% Gummi, 0 bis 10 Gew.% fettfreie, trockene Milchfeststoffe, 0 bis 15 Gew.% Öl und 0 bis 5 Gew.% Farbstoff, Vitamine und Geschmacksstoffe enthält.

13. Verfahren nach Anspruch 11 oder 12, dadurch gekennzeichnet, daß der Gummi ausgewählt wird aus Xanthan, Carrageen, Guar, Carboxymethylcellulose und Mischungen derselben; das Öl ausgewählt wird aus Pflanzen, Mais, Baumwollsamen, Sojabohnen, Saflor, Sonnenblumen, Erdnuß, Rapssamen, Sesam, teilweise hydrogenierten Sojabohnen und Mischungen derselben; und das Emulgierungsmittel Lecithin umfaßt.

14. Verfahren nach Anspruch 13, dadurch gekennzeichnet, daß der Käsefeststoff enthält: 30 bis 40 Gew.% Wasser, 15 bis 20 Gew.% Kasein, 15 bis 20 Gew.% Öl, 0 bis 15 Gew.% Naturkäse, 0 bis 10 Gew.% Molke, 1 bis 5 Gew.% Magermilch, 0 bis 5 Gew.% Salz, 0 bis 5 Gew.% enzymmodifizierten Käse, 0 bis 0,3 Gew.% antimikrobielles Mittel, 0 bis 1 Gew.% Dinatriumphosphat, ausreichend Säure zur Einstellung des pH-Wertes des Käsefeststoffes auf 6 oder weniger, eine ausreichende Menge Mineralemulgator zur Einstellung des Schmelzindexes des Käsefeststoffes auf 1 oder weniger und 0 bis 10 Gew.% zusätzlichen Geschmacks- und Farbstoff.

15. Verfahren nach Anspruch 14, dadurch gekennzeichnet, daß der Mineralemulgator ausgewählt wird aus Natriumhexametaphosphat und Tetranatriumpyrophosphat.

16. Verfahren nach Anspruch 9, dadurch gekennzeichnet, daß jeder Käsefeststoffteil ungefähr die Dimensionen eines 1/16 bis 3/8 Zoll (1,6 bis 9,5 mm) Würfels hat.

17. Verfahren nach Anspruch 16, dadurch gekennzeichnet, daß die Käsefeststoffe zwischen 10 und 45 Gew.% der Ei- und Käsezusammensetzung umfassen.

18. Verfahren nach Anspruch 8 oder 9, dadurch gekennzeichnet, daß die genannten flüssige Eibasis aus einem Eiprodukt mit geringem Cholesterin- und reduziertem Kaloriengehalt besteht, das 60 bis 96 Teile Einweiß, 0 bis 18 Teile Wasser, 2 bis 15 Teile Protein und geringe effektive Mengen Stabilisatoren, Geschmacks- und Farbstoffe enthält.

19. Verfahren nach Anspruch 18, dadurch gekennzeichnet, daß das genannte Protein ausgewählt wird aus fettfreien, trockenen Milchfeststoffen, pulverförmigen Eialbumin und Sojaprotein.

20. Verfahren nach Anspruch 9 oder 10, dadurch gekennzeichnet, daß der Käuse bezogen auf das Gewicht enthält: ungefähr 18% Kasein, 18% teilweise hydrogeniertes Sojabohnenöl, 5% Molke, 4,8% Magermilch, 2,5% Milchsäure, 2,5% Salz, 10% Schweizerkäse, 2,5% enzymmodifizierten Käse, 0,5% Dinatriumphosphat, 0,2% Sorbinsäure und 35% Wasser.

21. Verfahren nach Anspruch 8, dadurch gekennzeichnet, daß nach der Kühlung das genannte flüssige Ei- und Käseprodukt mit darin enthaltenen, voneinander getrennten Käsestückchen erhält.

# EP 0 149 517 B1

**Revendications pour les Etats Contractants BE CH FR GB IT LI LU NL SE**

1. Composition d'oeuf et de fromage stable à la conservation, prête pour cuisson, qui comprend une base d'oeuf liquide contenant une multiplicité de particules de solides de fromage discontinues dont chacune a approximativement les dimensions d'un cube de 1/16 à 3/8 d'inch (1,6 à 9,5 mm); lesdites particules constituant 5 à 45% de la composition d'oeuf et de fromage et ayant un indice d'humidité de 3 ou moins et un indice de fusion de 1 ou moins; la base d'oeuf liquide comportant 20 à 99,5% en poids de blanc d'oeuf; 0 à 1% en poids de gomme; 0 à 10% en poids de solides de lait sec sans corps gras; 0 à 15% en poids d'huile; et 0 à 5% en poids de colorant, vitamine et agent d'aromatisation; de sorte que lesdites particules de fromage conservent sensiblement leur intégrité structurale à la conservation pendant au moins 7 jours à des températures de réfrigérateur.

2. Composition selon la revendication 1 dans laquelle la base d'oeuf liquide comporte une gomme.

3. Composition selon la revendication 2 dans laquelle on choisit la gomme parmi le xanthame, le carragheen, l'agar-agar, la carboxyméthyl cellulose et leurs mélanges; on choisit l'huile parmi les huiles végétales de maïs, de graines de coton, de soja, de carthame, de tournesol, d'arachide, de colza, de sésame, l'huile de soja partiellement hydrogénée et leurs mélanges; et l'émulsifiant est de la lécithine.

4. Composition selon la revendication 3 dans laquelle le solide de fromage comprend 30 à 40% en poids d'eau, 15 à 20% en poids de caséine; 15 à 20% en poids d'huile; 0 à 15% en poids de fromage naturel; 0 à 10% en poids de petit lait; 1 à 5% en poids de lait écrémé; 0 à 5% en poids de sel, 0 à 5% en poids de fromage modifié par enzyme; 0 à 0,3% en poids d'agent antimicrobien; 0 à 1% en poids de phosphate disodique; assez d'acide pour ajuster le pH du solide de fromage à 6 ou moins; und quantité d'émulsifiant minéral suffisante pour ajuster l'indice de fusion du solide de fromage à 1 ou moins; et 0 à 10% en poids d'agent d'aromatisation et de colorant supplémentaires.

5. Composition selon la revendication 4 dans laquelle l'émulsifiant minéral est choisi parmi l'hexamétaphosphate de sodium et le pyrophosphate tétrasodique.

6. Composition selon toute revendication précédentes dans laquelle les solides de fromage constituent environ 10 à 45% en poids de la composition d'oeuf et de fromage.

7. Procédé de préparation de composition d'oeuf et de fromage stable à la conservation, prête pour cuisson, qui comprend une base d'oeuf liquide contenant une multiplicité de particules de fromage discontinues dont chacune à approximativement les dimensions d'un cube de 1/16 à 3/8 d'inch (1,6 à 9,5 mm); lesdites particules consituant 5 à 45% de la composition d'oeuf et de fromage et ayant un indice d'humidité de 3 ou moins et un indice de fusion de 1 ou moins; la base d'oeuf liquide comportant 20 à 99,5% en poids de blanc d'oeuf; 0 à 1% en poids de gomme; 0 à 10% en poids de solides de lait sec sans corps gras; 0 à 15% en poids d'huile; et 0 à 5% en poids de colorant, de vitamine et d'agent d'aromatisation; de sorte que lesdites particules de fromage conservent sensiblement leur intégrité structurale à la conservation pendant au moins 7 jours à des températures de réfrigérateur, ledit procédé comprenant la combinaison de la base d'oeuf liquide avec la multiplicité de particules solides de fromage.

8. Procédé de préparation de plat d'oeuf et de fromage cuit, qui comprend le chauffage d'une composition selon l'une quelconque des revendications 1 à 6 opéré jusqu'à ce que la protéine de l'oeuf se coagule formant une masse semi-solide comportant des particules de fromage fondu discontinues dispersées en son sein.

9. Procédé de préparation et de conservation dans un état stable d'une composition d'oeuf et de fromage liquide, laquelle composition fournit, après conservation pendant au moins 1 semaine, une base d'oeuf liquide contenant des morceaux de fromage discontinus comprenant:

(a) la préparation d'une composition liquide contenant de l'oeuf et du fromage stable à la conservation, susceptible de cuisson, comprenant le mélange de morceaux de fromage solide discontinus avec une base d'oeuf liquide, ladite base d'oeuf liquide comportant 20 à 100% en poids de blanc d'oeuf et lesdits morceaux de fromage ayant un indice d'humidité de 3 ou moins et un indice de fusion de 1 ou moins;

(b) le refroidissement de ladite composition préparée conformément à l'étape (a) jusqu'à des températures de réfrigérateur et le maintien de ladite composition à ladite température pendant au moins 7 jours;

(c) la cessation de l'application desdites températures de réfrigérateur à ladite composition d'oeuf et de fromage, pour l'obtention d'une base d'oeuf liquide contenant des morceaux discontinus dudit fromage, ladite base d'oeuf liquide pouvant être transformée par cuisson en produit alimentaire composé d'oeuf cuit dans lequel se trouve du fromage ramolli ou fondu à l'état discontinu.

10. Procédé de préparation et de conservation dans un état stable d'une composition contenant une base d'oeuf liquide et du fromage, laquelle composition fournit après conservation à des températures de congélateur pendant au moins 3 mois une composition d'oeuf liquide contenant des morceaux de fromage discontinus dotés d'intégrité structurale dans la base d'oeuf liquide comprenant:

(a) la préparation d'une composition stable à la conservation, susceptible de cuisson, par mélange de morceaux de fromage solides discontinus avec une base d'oeuf liquide, ladite base d'oeuf liquide comportant 20 à 100% en poids de blanc d'oeuf liquide et lesdits morceaux de fromage ayant un indice d'humidité d'environ 3 ou moins et un indice de fusion d'environ 1 ou moins;

(b) le maintien dudit produit de l'étape (a) à l'état congelé à des températures de congélateur pendant

EP 0 149 517 B1

au moins 3 mois environ, plus la décongélation de ladite composition pour l'obtention de ladite base d'oeuf liquide contenant lesdits morceaux de fromage discontinus.

11. Procédé selon la revendication 10 dans lequel on cuit le produit décongelé selon la revendication 10 pour obtenir un produit contenant de l'oeuf cuit dans lequel se trouve du fromage ramolli ou fondu à l'état discontinu.

12. Procédé selon la revendication 10 ou 11 dans lequel la base d'oeuf liquide comporte une gomme.

13. Procédé selon la revendication 10 ou 11 dans lequel la base d'oeuf liquide comporte 20 à 99,5% en poids de blanc d'oeuf; 0 à 1% en poids de gomme; 0 à 10% en poids de solides de lait sec sans corps gras; 0 à 15% en poids d'huile; et 0 à 5% en poids de colorant, de vitamines et d'agent d'aromatisation.

14. Procédé selon la revendication 12 ou 13 dans lequel la gomme est choisie parmi le xanthame, le carragheen, l'agar-agar, la carboxyméthyl cellulose et leurs mélanges; l'huile est choisie parmi les huiles végétales, de maïs, de graines de coton, de sésame, de soja partiellement hydrogénée et leurs mélanges; et ladite base d'oeuf liquide comporte un émulsifiant qui est constitué par de la lécithine.

15. Procédé selon la revendication 14 dans lequel le solide de fromage comprend 30 à 40% en poids d'eau, 15 à 20% en poids de caséine; 15 à 20% en poids d'huile; 0 à 15% en poids de fromage naturel; 0 à 10% en poids de petit lait; 1 à 5% en poids de lait écrémé; 0 à 5% en poids de sel; 0 à 5 % en poids de fromage modifié par enzyme, 0 à 0,3% en poids d'agent antimicrobien; 0 à 1 % en poids de phosphate disodique; assez d'acide pour ajuster le pH du solide de fromage à 6 ou moins; une quantité suffisante d'émulsifiant minéral pour ajuster l'indice de fusion du solide de fromage à 1 ou moins; et 0 à 10% en poids d'agent d'aromatisation et de colorant supplémentaires.

16. Procédé selon la revendication 15 dans lequel l'émulsifiant minéral est choisi parmi l'hexaméta-phosphate de sodium et le pyrophosphate tétrasodique.

17. Procédé selon la revendication 10 dans lequel chaque particule de solide de fromage a les dimensions approximatives d'un cube de 1/16 à 3/8 d'inch (1,6 à 9,5 mm).

18. Procédé selon la revendication 17 dans lequel les solides de fromage comportent 10 à 45 % en poids de la composition d'oeuf et de fromage.

19. Procédé selon la revendication 9 ou 10 dans lequel ladite base d'oeuf liquide est constituée par un produit d'oeuf à basses teneurs en cholestérol et en calories comportant en poids 60 à 96 parties de blanc d'oeuf, 0 à 18 parties d'eau, 2 à 15 parties de protéine et des quantités efficaces mineures de stabilisant, d'agent d'aromatisation et de colorant.

20. Procédé selon la revendication 19 dans lequel ladite protéine est choisie parmi les solides de lait sec sans corps gras, le blanc d'oeuf en poudre et la protéine de soja.

21. Procédé selon la revendication 10 ou 11 dans lequel ledit fromage comporte en poids environ 18 % de caséine, 18 % d'huile de soja partiellement hydrogénée, 5 % de petit lait, 4,8 % de lait écrémé, 2,5 % d'acide lactique, 2,5 % de sel, 10 % de fromage suisse, 2,5 % de fromage modifié par enzyme, 0,5 % de phosphate disodique, 0,2 % d'acide sorbique et 35 % d'eau.

22. Procédé selon la revendication 9 dans lequel à la suite de ladite réfrigération on cuit ledit produit liquide d'oeuf et de fromage pour obtenir un produit d'oeuf cuit dans lequel se trouvent des morceaux de fromage discontinus.


**Revendicattions pour l'Etat Contractant AT**

1. Procédé de préparation de composition d'oeuf et de fromage stable à la conservation, prête pour cuisson, qui comprend une base d'oeuf liquide contenant une multiplicité de particules de solides de fromage discontinues dont chacune a approximativement les dimensions d'un cube de 1/16 à 3/8 d'inch (1,6 à 9,5 mm); lesdites particules constituant 5 à 45 % de la composition d'oeuf et de fromage et ayant un indice d'humidité de 3 ou moins et un indice de fusion de 1 ou moins; la base d'oeuf liquide comportant 20 à 99,5 % en poids de blanc d'oeuf; 0 à 1 % en poids de gomme; 0 à 10 % en poids de solides de lait sec sans corps gras; 0 à 15 % en poids d'huile; et 0 à 5 % en poids de colorant, vitamine et agent d'aromatisation; de sorte que lesdites particules de fromage conservent sensiblement leur intégrité structurale à la conservation pendant au moins 7 jours à des températures de réfrigérateur, ledit procédé comprenant la combinaison de la base d'oeuf liquide avec la multiplicité de particules de solides de fromage.

2. Procédé selon la revendication 1 dans lequel la base d'oeuf liquide comporte une gomme.

3. Procédé selon la revendication 2 dans lequel on choisit la gomme parmi le xanthame, le carragheen, l'agar-agar, la carboxyméthyl cellulose et leurs mélanges; on choisit l'huile parmi les huiles végétales, de maïs, de graines de coton, de soja, de carthame, de tournesol, d'arachide, de colza, de sésame, l'huile de soja partiellement hydrogénée et leurs mélanges; et l'émulsifiant est de la lécithine.

4. Procédé selon la revendication 3 dans lequel le solide de fromage comprend 30 à 40 % en poids d'eau, 15 à 20 % en poids de caséine; 15 à 20 % en poids d'huile; 0 à 15 % en poids de fromage naturel; 0 à 10 % en poids de petit lait; 1 à 5 % en poids de lait écrémé; 0 à 5 % en poids de sel; 0 à 5 % en poids de fromage modifié par enzyme; 0 à 0,3 % en poids d'agent antimicrobien; 0 à 1 % en poids de phosphate disodique; assez d'acide pour ajuster le pH du solide de fromage à 6 ou moins; une quantité d'émulsifiant minéral suffisante pour ajuster l'indice de fusion du solide de fromage à 1 ou moins; et 0 à 10 % en poids d'agent d'aromatisation et de colorant supplémentaires.

5. Procédé selon la revendication 4 dans lequel l'émulsifiant minéral est choisi parmi l'hexaméta-phosphate de sodium et le pyrophosphate tétrasodique.

6. Procédé selon toute revendication précédente dans lequel les solides de fromage constituent environ 10 à 45 % en poids de la composition d'oeuf et de fromage.

7. Procédé de préparation de plat d'oeuf et de fromage cuit, qui comprend le chauffage d'une composition selon l'une quelconque des revendications 1 à 6 opéré jusqu'à ce que la protéine de l'oeuf se coagule formant une masse semi-solide comportant des particules de fromage fondu discontinues dispersées en son sein.

8. Procédé de préparation et de conservation dans un état stable d'une composition d'oeuf et de fromage liquide, laquelle composition fournit, après conservation pendant au moins 1 semaine, une base d'oeuf liquide contenant des morceaux de fromage discontinus comprenant:

(a) la préparation d'une composition liquide contanant de l'oeuf et du fromage stable à la conservation, susceptible de cuisson, comprenant le mélange de morceaux de fromage solide discontinus avec une base d'oeuf liquide, ladite base d'oeuf liquide comportant 20 à 100 % en poids de blanc d'oeuf et lesdits morceaux de fromage ayant un indice d'humidité de 3 ou moins et un indice de fusion de 1 ou moins;

(b) le refroidissement de ladite composition préparée conformément à l'étape (a) jusqu'à des températures de réfrigérateur et le maintien de ladite composition à ladite température pendant au moins 7 jours;

(c) la cessation de l'application desdites températures de réfrigérateur à ladite composition d'oeuf et de fromage, pour l'obtention d'une base d'oeuf liquide contenant des morceaux discontinus dudit fromage, ladite base d'oeuf liquide pouvant être transformée par cuisson en produit alimentaire composé d'oeuf cuit dans lequel se trouve du fromage ramolli ou fondu à l'état discontinu.

9. Procédé de préparation et de conservation dans un état stable d'une composition contenant une base d'oeuf liquide et du fromage, laquelle composition fournit après conservation à des températures de congélateur pendant au moins 3 moins une composition d'oeuf liquide contenant des morceaux de fromage discontinus dotés d'intégrité structurale dans la base d'oeuf liquide comprenant:

(a) la préparation d'une composition stable à la conservation, susceptible de cuisson, par mélange de morceaux de fromage solides discontinus avec une base d'oeuf liquide, ladite base d'oeuf liquide comportant 20 à 100 % en poids de blanc d'oeuf liquide et lesdits morceaux de fromage ayant un indice d'humidité d'environ 3 ou moins et un indice de fusion d'environ 1 ou moins;

(b) le maintien dudit produit de l'étape (a) à l'état congelé à des températures de congélateur pendant au moins 3 mois environ, puis la décongélation de ladite composition pour l'obtention de ladite base d'oeuf liquide contenant lesdits morceaux de fromage discontinus.

10. Procédé selon la revendication 9 dans lequel on cuit le produit décongelé selon la revendication 9 pour obtenir un produit contenant de l'oeuf cuit dans lequel se trouve du fromage ramolli ou fondu à l'état discontinu.

11. Procédé selon la revendication 9 ou 10 dans lequel la base d'oeuf liquide comporte une gomme.

12. Procédé selon la revendication 9 ou 10 dans lequel la base d'oeuf liquide comporte 20 à 99,5 % en poids de blanc d'oeuf; 0 à 1 % en poids de gomme, 0 à 10 % en poids de solides de lait sec sans corps gras; 0 à 15 % en poids d'huile; et 0 à 5 % en poids de colorant, de vitamines et d'agent d'aromatisation.

13. Procédé selon la revendication 11 ou 12 dans lequel la gomme est choisie parmi le xanthame, le carragheen, l'agar-agar, la carboxyméthyl cellulose et leurs mélanges; l'huile est choisie parmi les huiles végétales, de maïs, de graines de coton, de sésame, de soja partiellement hydrogénée et leurs mélanges; et ladite base d'oeuf liquide comporte un émulsifiant qui est constitué par de la lécithine.

14. Procédé selon la revendication 13 dans lequel le solide de fromage comprend 30 à 40 % en poids d'eau, 15 à 20 % en poids de caséine; 15 à 20 % en poids d'huile; 0 à 15 % en poids de fromage naturel; 0 à 10 % en poids de petit lait; 1 à 5 % en poids de lait écrémé; 0 à 5 % en poids de sel; 0 à 5 % en poids de fromage modifié par enzyme; 0 à 0,3 % en poids d'agent antimicrobien; 0 à 1 % en poids de phosphate disodique; assez d'acide pour ajuster le pH du solide de fromage à 6 ou moins; une quantité suffisante d'émulsifiant minéral pour ajuster l'indice de fusion du solide de fromage à 1 ou moins; et 0 à 10 % en poids d'agent d'aromatisation et de colorant supplémentaires.

15. Procédé selon la revendication 14 dans lequel l'émulsifiant minéral est choisi parmi l'hexaméta-phosphate de sodium et le pyrophosphate tétrasodique.

16. Procédé selon la revendication 9 dans lequel chaque particule de solide de fromage à les dimensions approximatives d'un cube de 1/16 à 3/8 d'inch (1/6 à 9,5 mm).

17. Procédé selon la revendication 16 dans lequel les solides de fromage comportent 10 à 45 % en poids de la composition d'oeuf et de fromage.

18. Procédé selon la revendication 8 ou 9 dans lequel ladite base d'oeuf liquide est constituée par un produit d'oeuf à basses teneurs en cholestérol et en calories comportant en poids 60 à 96 parties de blanc d'oeuf, 0 à 18 parties d'eau, 2 à 15 parties de protéine et des quantités efficaces mineures de stabilisant, d'agent d'aromatisation zt de colorant.

19. Procédé selon la revendication 18 dans lequel ladite protéine est choisie parmi les solides de lait sec sans corps gras, le blanc d'oeuf en poudre et la protéine de soja.

20. Procédé selon la revendication 9 ou 10 dans lequel ledit fromage comporte en poids environ 18 % de caséine, 18 % d'huile de soja partiellement hydrogénée, 5 % de petit lait, 4,8 % de lait écrémé, 2,5 % d'acide lactique, 2,5 % se sel, 10 % de fromage suisse, 2,5 % de fromage modifié par enzyme, 0,5 % de phosphate disodique, 0,2 % d'acide sorbique et 35 % d'eau.

21. Procédé selon la revendication 8 dans lequel à la suite de ladite réfrigération on cuit ledit produit liquide d'oeuf et de fromage pour obtenir un produit d'oeuf cuit dans lequel se trouvent des morceaux de fromage discontinus.